(19) Europäisches Patentamt / European Patent Office / Office européen des brevets

(11) **EP 3 816 756 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **20202468.3**

(22) Anmeldetag: **19.10.2020**

(51) Internationale Patentklassifikation (IPC):
**G05D 1/08** *(2006.01)*

(52) Gemeinsame Patentklassifikation (CPC):
**G05D 1/0875; B63B 27/30; B63B 2017/0072**

(54) **SYSTEM UND VERFAHREN ZUR REGELUNG EINER RELATIVBEWEGUNG**

SYSTEM AND METHOD FOR CONTROLLING A RELATIV MOVEMENT

SYSTÈME ET PROCÉDÉ POUR RÉGLER UN MOUVEMENT RELATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2019 DE 102019216366**

(43) Veröffentlichungstag der Anmeldung:
**05.05.2021 Patentblatt 2021/18**

(73) Patentinhaber: **Van Halteren Technologies Boxtel B.V.**
**5281 RS Boxtel (NL)**

(72) Erfinder:
• **Schleyer, Markus**
**71640 Ludwigsburg (DE)**
• **Nguyen, Quang Huy**
**70193 Stuttgart (DE)**
• **Erz, Michael**
**75417 Muehlacker (DE)**

(74) Vertreter: **Novagraaf Technologies**
**2 rue Sarah Bernhardt**
**CS90017**
**92665 Asnières-sur-Seine Cedex (FR)**

(56) Entgegenhaltungen:
EP-A1- 2 270 545     EP-A1- 3 335 977
WO-A1-2015/009163     DE-A1-102017 200 392

**Beschreibung**

Gebiet der Erfindung

Die Erfindung betrifft ein System zur Bewegungskompensation einer Bewegung zwischen zwei Objekten und/oder zur Änderung einer Relativposition zwischen den Objekten.

Hintergrund der Erfindung

In der Offshore-Industrie, wie beispielsweise bei der Rohstoffförderung oder der Windenergiegewinnung, fallen zahlreiche Operationen an Objekten an. Diese können beispielsweise zwischen verschiedenen Schiffen oder Schiffen und feststehenden Strukturen oder Schiffen und schwimmenden Strukturen anfallen. Als feststehende Struktur kann beispielsweise eine Windenergieanlage oder eine feste Bohrplattform vorgesehen sein. Eine schwimmende Struktur ist beispielsweise als schwimmende Bohrplattform oder als ein unter Wasser an Seilen befindlicher Gegenstand ausgebildet. Bei den Operationen werden häufig Personen und Güter von einem Objekt zum anderen transferiert. Hierzu ist es notwendig, dass die Objekte miteinander verbunden werden, beispielsweise indem ein Schiff an eine feste Bohrplattform andockt, wobei vorausgesetzt wird, dass weder Personen, noch Güter verletzt oder beschädigt werden. Problematisch jedoch sind ungewollte und schwer oder nicht vorhersagbare Bewegungen des Objekts oder der Objekte, beispielsweise aufgrund der Wellenbewegung oder der Wetterbedingungen. Bei nicht optimalen Wetterbedingungen steigt das Risiko, dass Personen oder Güter bei solchen Operationen verletzt oder beschädigt werden, erheblich an. Um das Risiko zu senken oder zu vermeiden, werden die Operationen üblicher Weise bei nicht optimalen Wetterbedingungen unterbrochen oder verschoben. Wetterbedingte Verschiebungen oder Ausfälle führen zu erheblichen finanziellen Einbußen. Somit besteht ein hohes Interesse an Systemen, die es erlauben, auch Operationen unter schlechteren Bedingungen auszuführen.

EP 3 335977 A1 offenbart ein Verfahren und eine Vorrichtung zur aktiven Wellengangskompensation, wobei eine Relativbewegung zwischen einer Zielposition und einer Last durch eine Vorausberechnung zukünftiger Relativbewegungen mittels eines Recursive-Least-Squares-Algorithmus zumindest teilweise Kompensiert wird.

Offenbarung der Erfindung

Demgegenüber liegt der Erfindung die Aufgabe zugrunde, ein System und ein Verfahren zu schaffen, mit dem eine Bewegungskompensation zwischen zwei Objekten und/oder eine Änderung von der Relativposition zwischen den Objekten über eine verbesserte Regelung ermöglicht ist. Außerdem soll ein Fahrzeug mit dem System geschaffen werden.

Diese Aufgabe wird gelöst hinsichtlich des Systems gemäß den Merkmalen des Anspruchs 1, hinsichtlich des Verfahrens gemäß den Merkmalen des Anspruchs 8 und hinsichtlich des Fahrzeugs gemäß den Merkmalen des Anspruchs 9.

Vorteilhafte Weiterbildungen der Erfindung sind Gegenstand der Unteransprüche.

Erfindungsgemäß ist ein System vorgesehen, über das eine Bewegung eines ersten Objekts, beispielsweise eines schwimmenden Körpers, gegenüber einem zweiten Objekt, wie beispielsweise ein schwimmender Körper oder eine feststehende Struktur, regelbar ist. Vorzugsweise hat das erste Objekt und/oder das zweite Objekt zumindest einen Sensor. Über diesen können Rohdaten über ein Objektumfeld des ersten Objekts erfassbar sein, insbesondere mit einer bestimmten Abtastzeit oder Abtastrate. Zumindest eines der Objekte, insbesondere das Objekt, das den Sensor aufweist, kann über einen Aktor bewegbar sein. Alternativ oder zusätzlich ist denkbar, einen Aktor für ein Bauteil des Objekts, wie beispielsweise eine Gangway oder Schiffsgangway, vorzusehen. Mit dem Aktor für das Bauteil kann beispielsweise die Höhe des Bauteils oder ein Anstellwinkel zu einer Horizontalen oder einer Objektebene verändert werden. Hierdurch können beispielsweise Wellenbewegungen über den Aktor derart ausgeglichen werden, dass zumindest die Höhe eines äußeren Endabschnitts der Schiffsgangway gegenüber dem anderen Objekt gleichbleibt oder im Wesentlichen gleichbleibt. Des Weiteren kann vorzugsweise eine Steuereinheit vorgesehen sein.

Diese kann ein Regelungsmodul aufweisen, über das der Aktor regelbar ist. Vorzugsweise ist der Aktor derart geregelt, dass zwischen den Objekten eine Bewegungskompensation durchführbar ist. Alternativ oder zusätzlich kann vorgesehen sein, dass der Aktor und/oder ein weiterer Aktor derart regelbar ist, dass eine Änderung von der Relativposition der Objekte zueinander durchführbar ist. Selbstverständlich ist alternativ oder zusätzlich denkbar, dass mit dem Aktor, der regelbar ist, zwischen dem Bauteil des einen Objekts und dem anderen Objekt eine Bewegungskompensation und/oder eine Änderung der Relativposition durchführbar ist. Des Weiteren kann vorgesehen sein, dass die Steuereinheit ein Signalverarbeitungsmodul aufweist. Über dieses können dann die vom Sensor erfassten Rohdaten verarbeitet werden. Die Verarbeitung erfolgt dabei vorzugsweise derart, dass zumindest ein, insbesondere aktuelles, Bewegungsdatenelement (ht) ermittelbar ist. Des Weiteren kann vorteilhafterweise vorgesehen sein, dass die Steuereinheit ein Prädiktionsmodul hat. Über dieses kann vorzugsweise zumindest ein zukünftiges Bewegungsdatenelement ($h_{t+Ts}$) prädiziert sein. Vorzugsweise kann zumindest das prädizierte Bewegungsdatenelement ($h_{t+Ts}$) als Ist-Größe oder als Basis einer Ist-Größe für einen Ist-Größen-Eingang des Regelungsmoduls vorgesehen sein. Weiterhin weist die Steuereinheit ein Interpolationsmodul auf. Über das ist/sind aus den Bewegungsdatenelementen ($h_t$, $h_{t+Ts}$) des Prädiktionsmoduls und des Signalverarbeitungsmoduls zumindest ein oder mehrere Interpolationsbewegungsdatenelement/e ermittelbar, wobei das/die Interpolationsbewegungsdatenelement/e zeitlich zwischen zwei oder mehreren der ermittelten Bewegungsdatenelemente liegt/liegen. Das/die Interpolationsbewegungsdatenelement/e ist/sind als Basis einer Ist-Größe oder als Ist-Größe für den Ist-Größeneingang des Regelungsmoduls vorgesehen.

Diese Lösung hat den Vorteil, dass durch das prädizierte Bewegungsdatenelement ($h_{t+Ts}$) eine Zeitverzögerung im System, insbesondere auf Grund des Signalverarbeitungsmoduls, zumindest vermindert oder sogar verhindert werden kann, wodurch beispielsweise eine Kompensationsgüte der Bewegungskompensation verbessert ist.

Mit anderen Worten, werden mit dem Sensor die Rohdaten über das Umfeld des Objekts erfasst. Anhand der Signalverarbeitung des Signalverarbeitungsmoduls wird die Bewegung (ht) zwischen den Objekten berechnet. Diese Signalverarbeitung kann Zeitverzögerungen im System verursachen, welche die Kompensationsgüte vermindern würden. Das Prädiktionsmodul prädiziert anhand der berechneten Bewegung (ht) eine zukünftige Bewegung oder Relativbewegung oder einen Vektor von den zukünftigen Bewegungen oder Relativbewegungen [$h_t$, $h_{t+Ts}$... $h_t+k_{Ts}$]. Ts kann die Abtastzeit der Abtastrate des Sensors sein.

Mit dem Interpolationsmodul kann vorzugsweise die Güte der Bewegungskompensation verbessert werden, oder es kann gar für eine ausreichend gute Güte der Bewegungskompensation erforderlich sein, da das Regelungsmodul die zukünftige Relativbewegung in einer hohen Rate benötigt. Das Prädiktionsmodul alleine liefert dagegen auf Grund der niedrigen Abtastrate des Sensors oder der Signalverarbeitung ausgangsseitig mit einer entsprechend niedrigen Taktfrequenz Ausgangsgrößen. Das Interpolationsmodul kann vorteilhaft eingesetzt werden, um ein oder mehrere Interpolationsdatenelement/e zu ermitteln, wobei beispielsweise eine zur Kompensation der Zeitverzögerung benötigte Prädiktionszeit Tp im folgenden Bereich liegen kann: $0 \leq Tp \leq kTs$. Weiterhin kann mit dem Interpolationsmodul die Abtastrate oder Taktfrequenz auf die von der Regelung geforderte Abtastrate oder Taktfrequenz sinnvoll erhöht werden.

Mit anderen Worten, kann bei dem System eine Bewegung eines Objekts gegenüber einem zweiten Objekt, das beispielsweise feststehend ist, geregelt werden, ohne auf dem zweiten Objekt Markierungen oder Sensorik anzubringen. Die Regelung hierfür kann verbessert werden, indem zum einen eine Prädiktion durchgeführt wird, um die Zeitverzögerung zu kompensieren, und zum anderen eine Interpolation, um eine höhere Frequenz des Ist-Größen-Eingangs des Regelungsmoduls zu erreichen. Mit anderen Worten können über den zumindest einen Sensor die Rohdaten zu einem Zeitpunkt t erfasst werden und über das Signalverarbeitungsmodul zu einem Bewegungsdatenelement ht oder zu Bewegungsdaten oder zu einer Relativbewegung zum Zeitpunkt t berechnet werden. Dies dient dann vorzugsweise als Eingangswert zur Schätzung des zukünftigen Wertes $h_{t+1}$ im Prädikationsmodul. Das Interpolationsmodul kann dann auf Basis der Relativbewegung oder Bewegungsdaten oder des Bewegungsdatenelementes, das vom Prädikationsmodul ermittelt wird, und/oder aus den berechneten Daten des Signalverarbeitungsmoduls zumindest eine weitere Relativbewegung oder Bewegung oder Bewegungsdaten oder Bewegungsdatenelement ermitteln, die/das zwischen dem Zeitpunkt t und zumindest dem nächsten Prädikationszeitpunkt liegt/liegen.

Die Regelung ist vorteilhafterweise verbessert, da zum einen eine Prädiktion des Prädiktionsmoduls durchgeführt wird, um die Zeitverzögerung zu kompensieren, und dass zum anderen eine Interpolation im Interpolationsmodul vorgesehen ist, um eine höhere Frequenz des Ist-Größen-Eingangs des Regelungsmoduls zu erreichen.

Vorzugsweise liegt/liegen das/die Interpolationsbewegungsdatenelement/e zeitlich zwischen zwei oder mehreren der ermittelten Bewegungsdatenelemente ($h_t$, $h_{t+1}$). Vorzugsweise liegen diese Datenelemente zeitlich zwischen dem aktuellen und dem zukünftigen und/oder zwischen den zukünftigen Bewegungsdatenelementen.

In Weiterer Ausgestaltung der Erfindung kann vorgesehen sein, dass für das Regelungsmodul als Ist-Größe zumindest dasjenige Interpolationsbewegungsdatenelement ausgewählt ist, das einen geforderten Zeitabstand zum aktuellen Bewegungsdatenelement (ht) oder eine vom Regelungsmodul geforderte Abtastzeit Tc aufweist.

Im Vergleich zu dem erfindungsgemäßen System mit dem Prädikationsmodul und/oder dem Interpolationsmodul ist denkbar Bewegungskompensationssysteme nach einem reaktiven Ansatz zu implementieren. Hier kann die Bewegung mit Sensoren erfasst sein. Anschließend kann diese an eine Regelung weitergegeben werden und eine Aktuatorik kann ein System in seiner Gegenbewegung veranlassen, um eine Bewegungskompensation zu realisieren. In diesem Ansatz spielt die Abtastrate der Erfassung und die Systemzeitverzögerung, die durch die Systemdynamik und Rechenzeit verursacht wird, eine entscheidende Rolle für die Güte der Bewegungskompensation. Je größer die Zeitverzögerung ist, desto schlechter wird die Bewegung kompensiert. Durch das erfindungsgemäße System können diese Nachteile beseitigt werden.

Als Sensor ist beispielsweise ein Sensor mit einer geringeren Abtastrate im Vergleich zu einer Taktfrequenz der Steuereinheit vorgesehen. Beispielsweise ist eine Kamera und/oder ein Light-Detection-and-Ranging (Lidar) System und/oder ein Radio-Detection-and-Ranging (Radar) System zur Erfassung der Rohdaten vorgesehen. Obwohl die Sensoren eine vergleichsweise niedrige Abtastfrequenz haben, kann mit dem erfindungsgemäßen System auf Grund des Prädikationsmoduls und/oder des Interpolationsmoduls eine Verbesserung der Kompensationsgüte der Bewegungskompensation erreicht werden und eine hohe Zeitverzögerung im System vermieden werden. Beispielsweise erfasst das Lidar-System eine Punktewolke der Umgebung des Objekts mit 10 Hz. Ohne das erfindungsgemäße System hat die Steuereinheit oder Regelung dann zwischen zwei Abtastzeitpunkten des Sensors mit der niedrigen Abtastrate keine Information und regelt das System daher mit dem letzten ermittelten Wert. Dadurch wird die Bewegung, die in dieser Zwischenzeit zwischen den Objekten erfolgt, nicht kompensiert und führt zu einer niedrigen Kompensationsgüte ohne das erfindungsgemäße System.

Mit anderen Worten ermöglicht der Einsatz von fortschrittlichen umfelderfassenden Sensortechnologien, wie beispielsweise Lidar-System, Kamera, Radar-System, und von modernen Algorithmen die Bewegungskompensation und automatisierte Andockfunktion zwischen zwei, insbesondere schwimmenden, Objekten oder Körpern. Der Sensor oder die Sensoren haben üblicherweise allerdings eine niedrige Abtastrate. Ohne das erfindungsgemäße System benötigen die Algorithmen einen hohen Rechenaufwand und eine lange Rechenzeit, was bisher zu einer hohen Zeitverzögerung im System geführt hat. Daher reagieren bisherige Systeme verzögert auf Störbewegungen, was zu einer niedrigen Kompensationsgüte führt. Durch das Prädikationsmodul und das Interpolationsmodul ist die Kompensationsgüte der Bewegungskompensation, insbesondere bei einer niedrigen Abtastfrequenz des Sensors, verbessert und eine Zeitverzögerung im System vermindert. Es kann somit eine Kompensationsgüte verbessert sein, ohne dass kostenintensives Equipment eingesetzt werden muss. Durch die verbesserte Bewegungskompensation können beispielweise auch Operationen zwischen zwei schwimmenden Körpern bei nicht optimalen Wetterbedingungen ausgeführt werden. Des Weiteren ist vorteilhaft, dass die Sicherheit bei Operationen zwischen zwei schwimmenden Körpern erhöht wird. Eine manuelle Bewegungskompensation einer Relativbewegung zwischen zwei schwimmenden Körpern ist in der Praxis üblicherweise nicht möglich, sodass derzeit bei derartigen Operationen immer erhebliche Risiken in Kauf genommen werden müssen und auch zu Unfällen führen. Durch den Einsatz eines oder mehrerer ein Umfeld erfassender Sensoren können autonome Operationen ermöglicht sein. Außerdem kann eine Zeitersparnis durch schnellere Docking-Operationen zwischen zwei schwimmenden Körpern durch das erfindungsgemäße System wegen der verbesserten Bewegungskompensation ermöglicht sein.

In weiterer Ausgestaltung der Erfindung kann beim Prädiktionsmodul vorgesehen sein, dass ein Zeitabstand Ts oder eine Abtastzeit Ts zwischen den Bewegungsdatenelementen ($h_t$, $h_{t+Ts}$) der Abtastzeit Ts des Sensors entspricht. Zur schnelleren Datenverarbeitung können die Mehrzahl oder Vielzahl von den über das Prädiktionsmodul ermittelten Bewegungsdatenelementen vorzugsweise in einem Rechenschritt als Vektor verarbeitet sein.

Für eine schnelle und einfache Prädizierung wird beim Prädiktionsmodul vorzugsweise ein Recursive-Least-Squares (RLS) Algorithmus eingesetzt. Ein derartiger Algorithmus hat eine vergleichsweise schnelle Konvergenz.

Bei dem zumindest einen Bewegungsdatenelement (ht) handelt es sich beispielsweise um einen zeitabhängigen Wert, wie beispielsweise um eine Höhe h(t). Alternativ oder zusätzlich kann vorgesehen sein, dass es sich bei dem zumindest einen Bewegungsdatenelement um eine zwei-dimensionale, oder drei-dimensionale Position handelt.

Die Abtastzeit ist beispielsweise ein Zeitabstand zwischen zwei Messungen des Sensors, die abhängig von dessen Messfrequenz ist, wie beispielsweise 20 Hz.

Erfindungsgemäß ist ein Verfahren mit dem System gemäß einem oder mehreren der vorhergehenden Ansprüche vorgesehen.

Erfindungsgemäß kann ein Fahrzeug mit dem System vorgesehen sein. Alternativ oder zusätzlich kann das Fahrzeug derart ausgestaltet sein, dass es das erfindungsgemäße Verfahren ausführen kann.

Bevorzugte Ausführungsbeispiele der Erfindung werden im Folgenden anhand schematischer Zeichnungen näher erläutert. Es zeigen:

Fig. 1 in einer schematischen Darstellung ein erfindungsgemäßes System zur Bewegungskompensation und/oder zur Änderung einer Relativposition für zumindest ein Objekt gemäß einem Ausführungsbeispiel,
Fig. 2 ein Regelungskonzept für das System aus Fig. 1 und
Fig. 3 in einer schematischen Blockdarstellung einen Teil der Regelung aus Fig. 2.

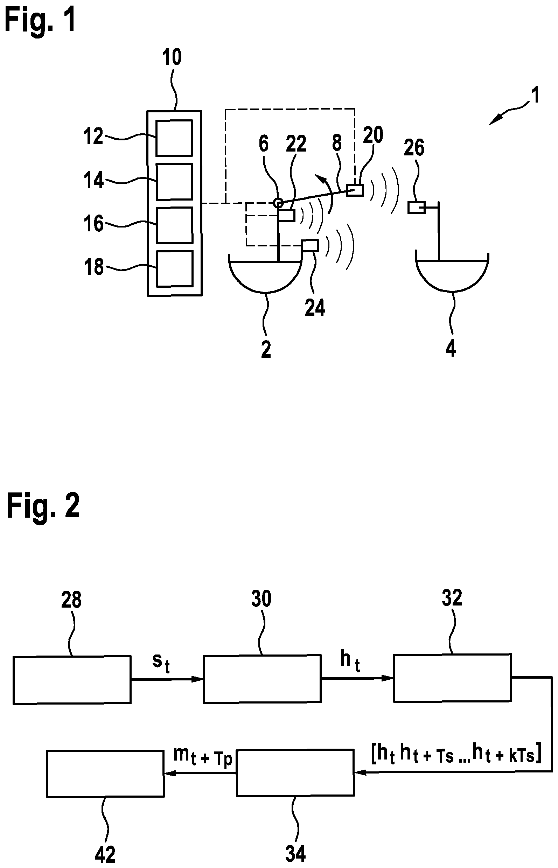

Gemäß Fig. 1 ist ein System 1 dargestellt. Mit diesem kann die Bewegung eines ersten Objekts 2 gegenüber einem zweiten Objekt 4 geregelt werden. Die Objekte 2, 4 sind als schwimmende Körper ausgebildet, wobei es sich bei diesen dann beispielsweise um Schiffe handeln kann. Das in der Fig. 1 erste Objekt 2 hat einen Aktor 6, über den eine Komponente in Form einer Schiffsgangway 8 bewegbar ist. Die Schiffsgangway ist beispielswiese in ihrer Höhe verschwenkbar oder verstellbar. Diese ist dabei vorzugsweise derart bewegbar, dass eine Höhe eines vom Objekt 2 wegweisenden Endes oder Endabschnitts der Schiffsgangway gegenüber einer Wasseroberfläche oder gegenüber einem Schiffsdeck des ersten Objekts 2 verstellbar ist. Insbesondere kann mit dem Aktor 6 eine Bewegungskompensation durchgeführt werden, so dass, beispielsweise trotz Wellenbewegung, eine Höhenposition der Schiffsgangway 8 gleichbleibt. Der Aktor 6 ist über eine Steuereinheit 10 ansteuerbar. Diese hat ein Regelungsmodul 12, ein Signalverarbeitungsmodul 14, ein Prädiktionsmodul 16 und ein Interpolationsmodul 18, wobei die Module 12 bis 18 untenstehend näher erläutert sind. Die Steuereinheit 10 ist des Weiteren mit mehreren Sensoren 20, 22 und 24 verbunden. Über die Sensoren 20, 22 und 24 können Rohdaten eines Objektumfelds des ersten Objekts 2 erfasst werden. Insbesondere kann über die Sensoren 20 bis 24 ein Bezugsbereich 26 des zweiten Objekts 4 ermittelt werden. Über die Steuereinheit 10 kann dann der Aktor 6 derart angesteuert werden, dass eine Relativposition des Endes der Schiffsgangway 8 und des Bezugsbereichs 26 gleich oder im Wesentlichen gleich bleibt. Des Weiteren ist denkbar, den Aktor 6 über die Steuereinheit 10 derart anzusteuern, dass das Ende der Schiffsgangway 8 und der Bezugsbereich 26 aneinander angenähert werden. Hierfür wird vorzugsweise ein weiterer Aktor eingesetzt, insbesondere ein Aktor zum Längenverstellen der Gangway. Der Aktor ist beispielsweise als Hydrozylinder ausgestaltet, über den somit zusätzlich zur Höhenverstellung der Gangway ein Teleskopieren der Gangway ermöglicht ist. Mit diesen sehr dynamischen Hydraulikaktoren kann das Ende der Gangway im Bezugsbereich gehalten werden.

Gemäß Fig. 2 erfolgt in einem ersten Schritt 28 eine Umfelderfassung mit den Sensoren 20 bis 24, s. Fig. 1. Rohdaten st werden dann von den Sensoren 22 bis 24 zum Signalverarbeitungsmodul 14 geführt, s. Fig. 1. In diesem erfolgt in Schritt 30 eine Signalverarbeitung. Durch die Signalverarbeitung werden die Rohdarten st derart verarbeitet, dass daraus ein aktuelles Bewegungsdatenelement ht oder Bewegungsdaten ht ermittelt werden. Diese werden zum Prädiktionsmodul 16, s. Fig. 1 geführt. In einem Schritt 32 wird dann eine Prädiktion durchgeführt. Mit anderen Worten wird das Bewegungsdatenelement ht zum Zeitpunkt t über das Signalverarbeitungsmodul 14 berechnet und als Eingangswert für das Prädiktionsmodul 16 zur Schätzung eines zukünftigen Bewegungsdatenelements $h_{t+1}$ oder Wertes $h_{t+1}$ verwendet. Die Schätzung basiert auf einem Recursive-Least-Squares (RLS) Algorithmus. Zur Schätzung wird hierbei ein lineares Modell verwendet:

$$h_{t+1} = \vec{h}_t^T \cdot \vec{\theta}_t$$

Ein Messdatenvektor $\vec{h}_t^T$ weist hierbei Werte oder Bewegungsdatenelemente aus N Messungen auf, die bis zum Zeitpunkt t erfolgt sind. $\overline{\Theta}_t$ ist hierbei ein Koeffizientenvektor. Des Weiteren wird der Kalman-Verstärkungsvektor ermittelt:

$$\vec{K}_t = \frac{P_{t-1} \cdot \vec{h}_{t-1}}{\lambda + \vec{h}_{t-1}^T P_{t-1} \vec{h}_{t-1}}$$

$\lambda$ ist hierbei ein forgetting-factor oder Vergessens-Faktor, wobei $0 \leq \lambda \leq 1$ gilt. $P_{t-1}$ stellt hierbei eine inverse Kovarianzmatrix des Mes-sdaten-Vektors $\vec{h}_t^T$ dar. Ein Apriori-Fehler $\varepsilon$ zwischen dem aktuellen Bewegungsdatenelement ht und dem geschätzten Bewegungsdatenelement wird folgendermaßen berechnet:

$$\epsilon_t = h_t - \vec{h}_{t-1}^T \vec{\theta}_{t-1}$$

Der Koeffizientenvektor $\vec{\Theta}_t$ wird mit folgender Gleichung ermittelt:

$$\vec{\theta}_t = \vec{\theta}_{t-1} + \vec{K}_t \epsilon_t$$

Eine inverse Kovarianzmatrix Pt kann anhand folgender Formel ermittelt werden:

$$P_t = \frac{P_{t-1} - \vec{K}_t \vec{h}_{t-1}^T P_{t-1}}{\lambda}$$

Anschließend wird eine Schätzung der Messwerte zu einem Zeitpunkt t+n berechnet. Dazu wird vorzugsweise iterativ ein neuer Messdaten-Vektor oder Vektor aus Bewegungsdatenelementen entsprechender Länge erzeugt und mit dem KoeffizientenVektor $\vec{\Theta}_t$ multipliziert:

$$h_{t+n} = (h_{t-N+n-1}, h_{t-N+n}, ..., h_{t+n-1}) \cdot \vec{\theta}_t$$

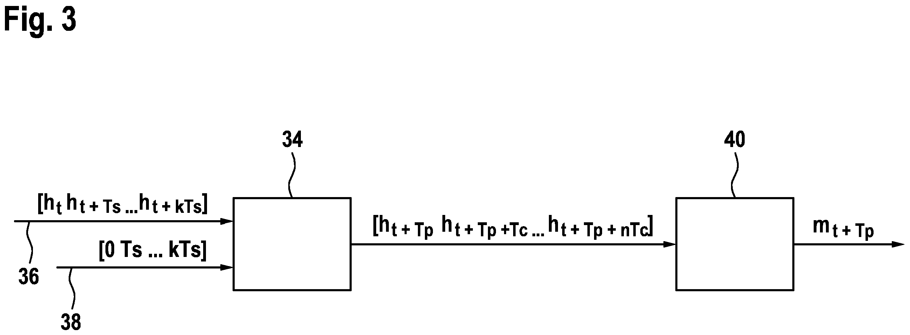

Anhand dieser Schätzungen kann dann der Ausgangsvektor $[h_t h_{t+Ts} ... h_{t+kTs}]$ gebildet werden. Bei dem Ausgangsvektor kann das aktuelle Bewegungsdatenelement und/oder eines oder mehrere zukünftige Bewegungsdatenelement/e $h_{t+Ts}$ oder $h_{t+kTs}$ vorgesehen sein. Der Ausgangsvektor wird dann dem Interpolationsmodul 18, s. Fig. 1, zugeführt und in Schritt 34 interpoliert. Dies ist im Folgenden in Fig. 3 näher erläutert.

Gemäß Fig. 3 wird in einem Schritt 34 im Interpolationsmodul 18, s. Fig. 1, eine Interpolation durchgeführt. Diese basiert auf dem Ausgangsvektor 36 und einem Abtastzeitvektor 38. Dieser weist dabei die Werte 0, Ts ... kTs auf. Ts ist hierbei die Abtastzeit, beispielsweise des Sensors 20. In Schritt 34 wird dann ein Interpolationsverfahren, wie beispielsweise eine lineare Interpolation oder Spline-Interpolation durchgeführt. Das Resultat der Interpolation sind dann eine Mehrzahl von Interpolationsbewegungsdatenelementen, die in einem Interpolations-Vektor $[h_{t+Tp} h_{t+Tp+Tc} ... h_{t+Tp+nTc}]$ gespeichert sind. Tc ist hierbei die vom Regelungsmodul 12 geforderte Abtastzeit. Tp ist die zur Kompensation der Zeitverzögerung benötigte Prädiktionszeit. n wird hierbei folgendermaßen ermittelt:

$$n = [Ts/Tc]$$

Aus dem Interpolations-Vektor $[h_{t+Tp} h_{t+Tp+Tc} ... h_{t+Tp+nTc}]$ wird in einem Schritt 40 ein sogenanntes Up-Sampling durchgeführt. Hierbei wird in einer Funktion ein einzelner Skalarwert im Interpolations-Vektor $[h_{t+Tp} h_{t+Tp+Tc} ... h_{t+Tp+nTc}]$ mit der vom Regelungsmodul 12 geforderten Abtastzeit Tc ausgewählt, wobei als Skalarwert dann $m_{t+Tp}$ vorgesehen ist.

Der Skalarwert $m_{t+Tp}$ aus Fig. 3 wird in Schritt 42 in Fig. 2 zur Regelung der Kompensationsbewegung über das Regelungsmodul 12 eingesetzt.

Offenbart ist die Regelung eines Objekts gegenüber einem zweiten, beispielsweise feststehenden, Objekts. Auf dem zweiten Objekt sind vorzugsweise keine Markierungen und/oder ist keine Sensorik notwendig. Auf dem ersten Objekt sind vorzugsweise Mittel zur kontaktlosen Positionsbestimmung vorgesehen. Als Mittel ist beispielsweise eine Kamera oder Videokamera und/oder ein Lidar angeordnet. Bei der Regelung wird vorzugsweise Prädiktion durchgeführt, um Zeitverzögerungen zu kompensieren. Alternativ oder zusätzlich kann eine Interpolation vorgesehen sein, um eine höhere Frequenz eines Ist-Größen-Eingangs der Regelung zu erreichen.

**Patentansprüche**

1. System (1), über das eine Bewegung eines ersten Objekts (2) gegenüber einem zweiten Objekt (4) regelbar ist, wobei das erste Objekt (2) zumindest einen Sensor (20) aufweist, über den Rohdaten (st) über ein Objektumfeld des ersten Objekts (2) erfassbar sind, und wobei zumindest eines der Objekte (2, 4) und/oder eine Komponente (8) eines der Objekte (2, 4) über einen Aktor (6) bewegbar ist, wobei eine Steuereinheit (10) vorgesehen ist, die ein Regelungsmodul (12) hat, über das der Aktor (6) derart regelbar ist, dass zwischen den Objekten (2, 4) eine Bewegungskompensation und/oder eine Änderung von deren Relativposition zueinander durchführbar ist, wobei die Steuereinheit (10) ein Signalverarbeitungsmodul (14) hat, über das die Rohdaten (s$_t$) derart verarbeitet sind, dass zumindest ein Bewegungsdatenelement (ht) ermittelt ist, wobei die Steuereinheit (10) ein Prädiktionsmodul (16) hat, über das basierend auf dem Bewegungsdatenelement (ht) zumindest ein zukünftiges Bewegungsdatenelement ($h_{t+Ts}$) prädiziert ist, wobei das zumindest eine zukünftige Bewegungsdatenelement ($h_{t+Ts}$) als Ist-Größe oder als Basis einer Ist-Größe für einen Ist-Größen-Eingang des Regelungsmoduls (12) vorgesehen ist, **dadurch gekennzeichnet, dass** die Steuereinheit (10) ein Interpolationsmodul (18) hat, über das aus den Bewegungsdatenelementen (h$_t$, $h_{t+Ts}$) des Prädiktionsmoduls (16) und des Signalverarbeitungsmoduls (14) zumindest ein oder mehrere Interpolationsbewegungsdatenelemente/e ($h_{t+Tp}$) ermittelbar ist/sind, wobei das/die Interpolationsbewegungsdatenelement/e ($h_{t+Tp}$) als Basis einer Ist-Größe oder als Ist-Größe für den Ist-Größen-Eingang des Regelungsmoduls (12) vorgesehen ist/sind und wobei das/die Interpolationsbewegungsdatenelement/e ($h_{t+Tp}$) zeitlich zwischen zwei oder mehreren der ermittelten Bewegungsdatenelemente (h$_t$, $h_{t+Ts}$) liegt/liegen.

2. System (1) nach Anspruch 1, wobei für das Regelungsmodul (12) als Ist-Größe dasjenige Interpolationsbewegungsdatenelement ($h_{t+Tp}$) ausgewählt ist, das eine geforderte Abtastzeit (Tc), insbesondere zum aktuellen Bewegungsdatenelement (ht) hat.

3. System (1) nach einem der vorhergehenden Ansprüche, wobei der Sensor (20) eine geringere Abtastrate im Vergleich zu einer Taktfrequenz der Steuereinheit (10) und/oder des Regelungsmoduls (12) hat.

4. System (1) nach einem der vorhergehenden Ansprüche, wobei ein Zeitabstand und/oder eine Abtastzeit zwischen den Bewegungsdatenelementen (h$_t$, h$_{t+Ts}$) der Abtastzeit (Ts) des Sensors (20) entspricht.

5. System (1) nach einem der vorhergehenden Ansprüche, wobei ein Abtastzeitpunkt (t) vorgesehen ist, an dem das aktuelle Bewegungsdatenelement (h$_t$) ermittelt ist.

6. Verfahren, welches das System (1) gemäß einem oder mehreren der vorhergehenden Ansprüche verwendet.

7. Fahrzeug mit dem System (1) gemäß einem der Ansprüche 1 bis 5, wobei das Fahrzeug das erste Objekt (2) darstellt.


**Claims**

1. System (1) by means of which a movement of a first object (2) relative to a second object (4) can be regulated, the first object (2) having at least one sensor (20) by means of which raw data (st) about an object environment of the first object (2) can be detected, and at least one of the objects (2, 4) and/or a component (8) of one of the objects (2, 4) being movable by means of an actuator (6), a control unit (10) being provided, which has a regulation module (12) by means of which the actuator (6) can be regulated such that a movement compensation and/or a change from their relative position to one another can be carried out between the objects (2, 4), the control unit (10) having a signal processing module (14) by means of which the raw data (st) are processed such that at least one movement data element (ht) is determined, the control unit (10) having a prediction module (16) by means of which at least one future movement data element (h$_{t+Ts}$) is predicted on the basis of the movement data element (ht), the at least one future movement data element (h$_{t+Ts}$) being provided as an actual variable or as the basis of an actual variable for an actual variable input of the regulation module (12), **characterized in that** the control unit (10) has an interpolation module (18) by means of which at least one or more interpolation movement data element(s) (h$_{t+Tp}$) can be detected from the movement data elements (h$_t$, h$_{t+Ts}$) of the prediction module (16) and the signal processing module (14), the interpolation movement data element(s) (h$_{t+Tp}$) being provided as the basis of an actual variable or as an actual variable for the actual variable input of the regulation module (12), and the interpolation movement data element(s) (h$_{t+Tp}$) temporally lying between two or more of the determined movement data elements (h$_t$, h$_{t+Ts}$).

2. System (1) according to claim 1, wherein the interpolation movement data element (h$_{t+Tp}$) which has a required sampling time (Tc), in particular for the current movement data element (ht), is selected as the actual variable for the regulation module.

3. System (1) according to any of the preceding claims, wherein the sensor (20) has a lower sampling rate compared to a clock frequency of the control unit (10) and/or the regulation module (12).

4. System (1) according to any of the preceding claims, wherein a time interval and/or a sampling time between the movement data elements (h$_t$, h$_{t+Ts}$) corresponds to the sampling time (Ts) of the sensor (20).

5. System (1) according to any of the preceding claims, wherein a sampling time (t) is provided at which the current movement data element (ht) is determined.

6. Method which uses the system (1) according to one or more of the preceding claims.

7. Vehicle having the system (1) according to any of claims 1 to 5, wherein the vehicle is the first object (2).


**Revendications**

1. Système (1), par le biais duquel un mouvement d'un premier objet (2) par rapport à un second objet (4) peut être réglé, dans lequel le premier objet (2) présente au moins un capteur (20), par le biais duquel des données brutes (st) sur un environnement d'objet du premier objet (2) peuvent être détectées et dans lequel au moins un des objets (2, 4) et/ou un composant (8) d'un des objets (2, 4) peut être déplacé par le biais d'un actionneur (6), dans lequel une unité de commande (10) est prévue, qui comporte un module de régulation (12), par le biais duquel l'actionneur (6) peut être réglé de telle sorte qu'entre les objets (2, 4) une compensation de mouvement et/ou une modification de leur position relative l'un par rapport à l'autre puissent être réalisées, dans lequel l'unité de commande (10) comporte un module de traitement de signal (14), par le biais duquel les données brutes (st) sont traitées de telle sorte qu'au moins un élément de données de mouvement (ht) soit déterminé, dans lequel l'unité de commande (10) comporte un module de prédiction (16), par le biais duquel, sur la base de l'élément de données de mouvement (ht), au moins un élément de données de mouvement futur ($h_{t+Ts}$) est prédit, dans lequel l'au moins un élément de données de mouvement futur ($h_{t+Ts}$) est envisagé comme grandeur réelle ou comme base d'une grandeur réelle pour une entrée de grandeurs réelles du module de régulation (12), **caractérisé en ce que** l'unité de commande (10) comporte un module d'interpolation (18), par le biais duquel, à partir des éléments de données de mouvement ($h_t$, $h_{t+Ts}$) du module de prédiction (16) et du module de traitement de signal (14), au moins un ou plusieurs éléments de données de mouvement d'interpolation ($h_{t+Tp}$) peuvent être déterminés, dans lequel le ou les éléments de données de mouvement d'interpolation ($h_{t+Tp}$) sont envisagés comme base d'une grandeur réelle ou comme grandeur réelle pour l'entrée de grandeurs réelles du module de régulation (12) et dans lequel le ou les éléments de données de mouvement d'interpolation ($h_{t+Tp}$) se trouvent temporellement entre deux ou plusieurs des éléments de données de mouvement ($h_t$, $h_{t+Ts}$) déterminés.

2. Système (1) selon la revendication 1, dans lequel, pour le module de régulation (12), l'élément de données de mouvement d'interpolation ($h_{t+Tp}$), qui comporte un temps d'échantillonnage (Tc) requis, en particulier pour l'élément de données de mouvement (ht) réel, est choisi comme grandeur réelle.

3. Système (1) selon l'une quelconque des revendications précédentes, dans lequel le capteur (20) comporte un taux d'échantillonnage inférieur par rapport à une fréquence d'horloge de l'unité de commande (10) et/ou du module de régulation (12).

4. Système (1) selon l'une quelconque des revendications précédentes, dans lequel un intervalle de temps et/ou un temps d'échantillonnage entre les éléments de données de mouvement ($h_t$, $h_{t+Ts}$) correspondent au temps d'échantillonnage (Ts) du capteur (20).

5. Système (1) selon l'une quelconque des revendications précédentes, dans lequel un instant d'échantillonnage (t) est prévu, au moment duquel l'élément de données de mouvement (ht) réel est déterminé.

6. Procédé, qui utilise le système (1) selon une ou plusieurs des revendications précédentes.

7. Véhicule comprenant le système (1) selon l'une quelconque des revendications 1 à 5, dans lequel le véhicule représente le premier objet (2).

**Fig. 1**

**Fig. 2**

$s_t$ $h_t$ $[h_t\ h_{t+Ts} \ldots h_{t+kTs}]$ $m_{t+Tp}$

**Fig. 3**

**IN DER BESCHREIBUNG AUFGEFÜHRTE DOKUMENTE**

**In der Beschreibung aufgeführte Patentdokumente**

- EP 3335977 A1